**Europäisches Patentamt**

**European Patent Office**

**Office européen des brevets**

(19)

(11) Veröffentlichungsnummer : **0 301 051 B1**

(12)

# EUROPÄISCHE PATENTSCHRIFT

(45) Veröffentlichungstag der Patentschrift :
**03.06.92 Patentblatt 92/23**

(21) Anmeldenummer : **88901220.9**

(22) Anmeldetag : **09.02.88**

(86) Internationale Anmeldenummer :
**PCT/CH88/00032**

(87) Internationale Veröffentlichungsnummer :
**WO 88/06106 25.08.88 Gazette 88/19**

(51) Int. Cl.⁵ : **B60G 11/26,** B60G 9/04,
B60G 17/00, B60G 15/12

(54) **ACHSAUFHÄNGUNG UND -FEDERUNG FÜR FAHRZEUGE, INSBESONDERE SCHWERFAHRZEUGE MIT ZWEI ODER MEHR ACHSEN.**

(30) Priorität : **12.02.87 CH 531/87**

(43) Veröffentlichungstag der Anmeldung :
**01.02.89 Patentblatt 89/05**

(45) Bekanntmachung des Hinweises auf die
Patenterteilung :
**03.06.92 Patentblatt 92/23**

(84) Benannte Vertragsstaaten :
**AT DE FR IT**

(56) Entgegenhaltungen :
**FR-A- 384 565**
**FR-A- 2 152 351**
**FR-A- 2 249 265**
**FR-A- 2 477 278**

(56) Entgegenhaltungen :
**FR-A- 2 503 055**
**GB-A- 978 944**
**US-A- 203 263**
**US-A- 2 094 882**
**US-A- 3 007 694**
**US-A- 4 491 338**

(73) Patentinhaber : **BAIKER, Walter**
**Chälenstrasse 2**
**CH-8433 Weiach (CH)**

(72) Erfinder : **BAIKER, Walter**
**Chälenstrasse 2**
**CH-8433 Weiach (CH)**

(74) Vertreter : **Frei, Alexandra Sarah**
**Frei Patentanwaltsbüro Hedwigsteig 6**
**Postfach 95**
**CH-8029 Zürich (CH)**

EP 0 301 051 B1

## Beschreibung

Die Erfindung liegt auf dem Gebiet der Fahrzeugtechnik und betrifft eine Achsaufhängung und -federung gemäss Oberbegriff des Patentanspruchs 1.

Bei Schwerfahrzeugen wie Feuerlöschfahrzeuge, Autokranfahrzeuge, Spezialfahrzeuge, schwere Militärfahrzeuge etc., ist es bis heute üblich, die Federung und der sogenannte Geländeausgleich für das Befahren von Bodenunebenheiten mittels starken Blattfedern resp. Blattfederpaketen zu bewerkstelligen. In einem solchen, relativ einfachen Federungssystem ist es ein Vorteil, dass die Längs- und Querführung der Achsen sozusagen gratis mitintegriert ist. Auch die oft in grosser Stärke auftretenden drehenden Kräfte am Achskörper selbst, welche beim Abbremsen und beim Anfahren an einem schweren Fahrzeug entstehen, können von starken Blattfederpaketen aufgefangen werden.

Die Nachteile sind jedoch folgende: Grosse Blattfederpakete sind schwergewichtig, haben verhältnismässig wenig Federweg und ihre Elastizität nimmt relativ schnell ab. Im weiteren können Blattfedersysteme nicht für die extremen Betriebsfälle Leergewicht einerseits und schwere (maximale) Zuladung andererseits umgestellt werden.

Ferner kann in ein Blattfedersystem weder eine Höhenverstellung des Fahrzeuges, noch ein Hangverneigungsausgleich eingebaut werden. Zudem brauchen die erwähnten Blattfederelemente zuviel Platz beim Einbau und vermindern den Radeinschlag an den gelenkten Achsen. Auch in der Bauhöhe eines Fahrzeuges wirken sich Blattfedersysteme hinderlich aus, nämlich, die Bauhöhe dieser Fahrzeuge, respektive die Höhe deren Ladeflächen, werden zwangsläufig zu hoch, was durch den damit ebenfalls hoch liegenden Schwerpunkt gravierende Nachteile, wie Kippgefahr usw. mit sich bringt.

Mit verschiedenen Massnahmen, wie etwa Einzelradaufhängen usw. wurde in letzter Zeit versucht, diesen Nachteilen auszuweichen. Einzelradaufhängungen blieben bei schweren Fahrzeugen jedoch ohne Erfolg, weil hier sehr grosse Kräfte an den Rädern auftreten (Kraftübertragung und Abbremsung), welche nicht einfach aufzufangen sind. Auch fehlt hier meistens noch den notwendige Platz zwischen den Rädern, den Achsen und am Fahrzeugkörper, um solche Mechaniken mit den nötigen Dimensionen einbauen zu können.

In der US--Patentschrifft US-A-2030263 ist auch ein Federungssystem beschrieben, das auf teleskopartigen Achse-Fahrgestell-Verbindungen basiert. Dabei sind die ineinander angeordneten, rohrförmigen Teile durch eine Schraubenfeder, die in dem teleskopartigen Bauelement angeordnet ist, federnd gegeneinander beweglich.

Es ist Aufgabe der Erfindung, den geschilderten Nachteilen abzuhelfen. Ferner ist es Aufgabe der Erfindung eine Achsaufhängig und -federung zu schaffen, mit der auch gleichzeitig ein Hangausgleich des Fahrzeuges möglich ist.

Die gestellte Aufgabe wird durch die im kennzeichnenden Teil des Patentanspruchs 1 angegebene Erfindung gelöst. Ausführungsformen der Erfindung sind in den abhängigen Patentansprüchen angegeben.

Anhand der nachfolgend aufgeführten Figuren, werden verschiedenen Ausführungsformen der Erfindung eingehend diskutiert.

Fig. 1 zeigt die schematische Darstellung, einer die Räder tragende Achse, welche an Gelenkbolzen lösbar mit teleskopischen Baugruppen verbunden sind, auf denen der Fahrzeugrahmen getragen wird.

Fig. 2 zeigt eine Ausführungsform einer teleskopischen Baugruppe mit integrierter Oel-Luft-Federung oder Gas-Federung.

Fig. 3 zeigt einen hydraulischen Federspeicher, wie er im Zusammenhang mit der Erfindung verwendet werden kann.

Fig. 4 zeigt ein anderes Ausführungsbeispiel einer teleskopischen Baugruppe, bei welcher das Teleskoprohr als sogenannter Plungerkolben arbeitet.

Fig. 5 zeigt dasselbe Ausführungsbeispiel wie Fig. 4 mit vollständig in das Mantelrohr eingefahrenden Teleskoprohr.

Fig. 6 zeigt die ausnivellierte Position einer Fahrzeugachse zum Chassis in Hanglage.

Fig. 7 zeigt ein weiteres Ausführungsbeispiel einer teleskopischen Baugruppe, eingesenkt in den Fahrzeugrahmen.

Fig. 8 zeigt die teleskopische Baugruppe in einer weiteren Ausführungsform, nämlich mit gross dimensioniertem Teleskoprohr.

Fig. 9 zeigt ein Ausführungsbeispiel einer Gelenkverbindung, welche eine Achse mit den teleskopischen Baugruppen verbinden kann.

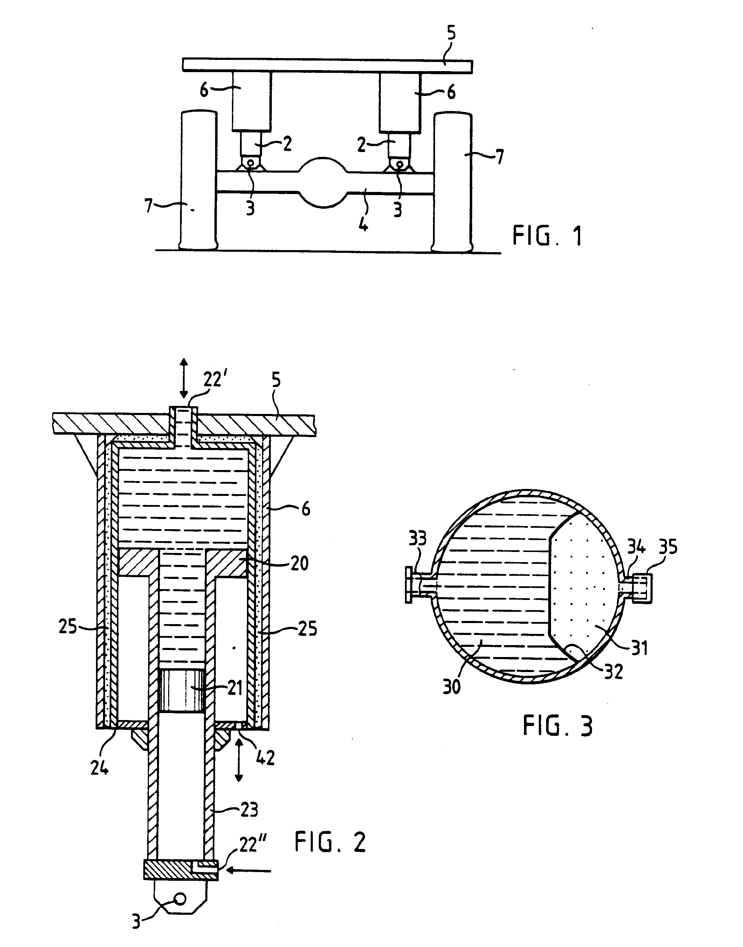

Fig. 1∅ zeigt ein weiteres Ausführungsbeispiel einer teleskopischen Baugruppe mit einem im Innern des Mantelrohrs und des Teleskoprohrs angeordneten, doppeltwirkenden Hydraulikzylinder zur Hanglageverstellung und Achsanhebung.

Die hier diskutierte Erfindung behebt eine ganze Anzahl Nachteile der Achsführung von heute bekannten

EP 0 301 051 B1

Schwerfahrzeugen. Mittels zweier teleskopische Baugruppen als Teleskopfederbeine 2 verwendet, welche über gelenkige Verbindungen 3 mit der Fahrzeugachse 4 verbunden sind, werden sowohl die beim Abbremsen oder Anfahren auftretende Verdrehungskraft der Achse 4, sowie die auftretenden Längs- und Querkräfte aufgenommen und über die Halterungsrohre 6, in denen der Teleskopzylinder mit dem Arbeitskolben und Teleskoprohr angeordnet sind, auf den Fahrzeugrahmen 5 übertragen, Gleichzeitig ist die Federung des Fahrzeuges in dem neuartigen Achsführungssystem gleich mit integriert. Die Federung kann sowohl hydraulisch als auch pneumatisch oder in Kombination beider bewerkstelligt werden.

Auch kann in einer Ausführungsform der erwähnten Hydraulikfederung gleichzeitig eine Höhenverstellung des Fahrzeuges sowie ein ausreichender Geländeausgleich, ja sogar eine "Hangverneigungsausgleich-Möglichkeit" mitintegriert werden.

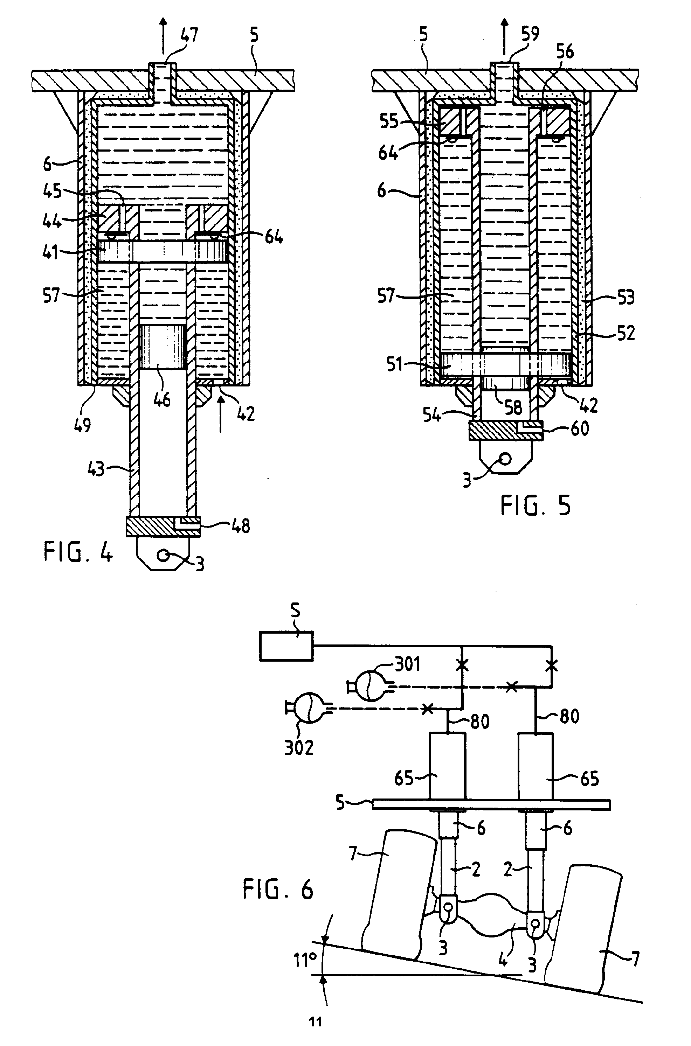

Fig. 1 zeigt nun die schematische Darstellung einer Achse 4 mit ihren Rädern 7. Die Achse ist an Gelenkbolzen 3 lösbar mit zwei teleskopische Baugruppen, im wesentlichen bestehend aus Teleskoprohr 2 und Führungsrohr bzw. Halterungsrohr 6, verbunden, welche in den Figuren 2,4,5 und 8 im Detail beschrieben sind. Die mit der Achse 4 verbundenen Teleskoprohre 2 sind, wie später gezeidt wird, in zusätzlichen Mantelrohren 24,52,89 geführt, in welchen sie auf und ab gleiten können. Zwischen den eben erwähnten, als Führungsrohre wirkenden Mantelrohren und den mit dem Fahrzeugrahmen 5 fest verbundenen Halterungsrohren 6,95 ist eine elastische, federnde Schicht 25,53, bspw. aus Gummi oder elastischem Kunststoff vorgesehen, welche Montagedifferenzen einerseits, sowie seitlich auf die Achse wirkende Schläge ausgleichen kann. Im weiteren muss diese nur wenige Millimeter dicke ausgleichende Schicht auch die Längen-Differenzen ausgleichen können, welche an den Achsbolzen 3 entstehen, wenn das am Fahrzeug in der Hanglage, wie Fig. 6 dies zeigt, in die Waagrechte ausgeglichen wird. Der Abstand zwischen den Bolzen 61 (Fig. 6) verkleinert sich dabei ein wenig. Die dämpfende federnde Schicht wirkt sich aber auch beim Anfahren und Bremsen positiv aus und im weiteren verhindert sie die Uebertragung der Lärm erzeugenden Bewegungen der Achsen, insbesondere der angetriebenen Achsen mit ihren schweren Antriebsaggregaten.

Dies wird näher in Fig. 2 gezeigt. Diese Figur zeigt eine einfache Ausführungform der teleskopische Baugruppe mittels einer im Teleskoprohr integrierten Oel-Luft Federung oder Gas-Federung. Das Halterungsrohr 6 ist fest mit dem Fahrzeugrahmen 5 verbunden. Ueber die federnde Schicht 25 ist das Halterungsrohr 6 mit dem Führungsrohr 24 verbunden. Damit wird ermöglicht, dass sich das zweite Mantelrohr (Führungsrohr 24) und das in ihm geführte Teleskoprohr quer zur Längsachse des Fahrzeuges soweit pendeln kann, dass die oben erwähnte Distanzveränderung der Anlenkpunkte 3 bei Schräglage der Achse, wie dies Fig. 6 darstellt, ausgeglichen werden kann. Das Teleskoprohr 23 ist einerseits im Mantelrohr 24 mit einem Hydraulikkolben 2Ø verbunden, andererseits weist es im Innern eine wieteren Kolben 21 auf,so dass eine Doppelfunktion möglich ist. Das Mantelrohr mit dem die Achse führenden Teleskoprohr wird dadurch zu einem ähnlichen Element, wie ein doppelt wirkender Hydraulikzylinder. Durch die Fluidzuführungen 22',22" kann durch Zu- oder Abführen eines Fluids das Fahrzeug zudem angehoben oder abgesenkt werden.

Fig. 3 zeigt einen hydraulischen Federspeicher, dessen eine Seite 3Ø unter Oeldruck und die andere Seite 31 unter Luft oder Gasdruck steht. Dazwischen befindet sich eine Membrane 32, die vorzugsweise aus Gummi gefertigt ist. Durch Ein- und Auslassstutzen 33 und 34 können die Arbeitsfluide zu- bzw. weggeführt werden. Der hier gezeigte Federspeicher hat einen durch einen Verschluss 35 gasdicht abgeschlossenen kopressiblen Gasraum 31, der durch den variirenden Flüssigkeitsdruck in der Kammer 3Ø mehr oder minder komprimiert wird.

Fig. 4 und zum Teil auch Fig. 5 zeigen ein anderes Ausführungsbeispiel der teleskopische Baugruppe, bei welcher das Teleskoprohr 43 als sogenannter Plungerkolben arbeitet. Da der Kolben 44,55 Durchführungslöcher 45, 56 aufweist, kann ein Teil des Oels beim Einfedern in den Raum 57 ausserhalb des Telekoprohres durchfliessen, während der andere Teil des Oels den Kolben 46, 58, gegen den mit Luft oder einem anderen Gas gefüllten Unterteil presst.

Im weiteren ist hier ein Ringkolben 51, 41 ersichtlich, mittels welchem, durch Einpressen von Oel durch eine Oeffnung 42, den Kolben 44, 55 und somit das Teleskoprohr 43, 54 in das Führungsrohr 49,52 gezogen werden kann. Damit können z.B. bei einem Autokran die Achsen vom Boden abgehoben werden. An den Durchführungs-Löchern 56, 45 sind Stahlmenbrane 64 angebracht, welche durch ihre Ventilwirkung das Rückgleiten des Teleskoprohres und damit die Ausfederung der Achse 4 verzögern, so dass durch diese Massnahme eine Stossdämpfungseffekt erreicht wird.

Fig. 5 zeigt dasselbe Ausführungsbeispiel wie Fig. 4, mit vollständig eingefahrenem Teleskoprohr 54. Durch die Oeffnung 59, welche an einem Reguliersystem angeschlossen ist, kann so das Fahrzeug mittels Betätigung des Kolbens 51 z.B. zum Beladen oder Niveauregulieren ganz abgesenkt oder niveau-ausreguliert werden.

Fig. 6 zeigt nun eine der möglichen Funktionen bei Anwendung der beschriebenen Massnahmen, nämlich die Position eines in der Hanglage ausnivellierten Fahrzeuges. Die Hangneigung beträgt ca. 11grad, sie ist

3

also eine nicht selten vorkommende, von der Waagrechten abweichende Neigung. Gut sichtbar sind die Einschieböffnungen oder Einbaukavernen 65 im Fahrgestell, an welchen über t-Rohre 84 und wegführenden Leitungen zuschaltbare Reguliersysteme S und hydraulische Federspeicher 3Ø1, 3Ø2 (Figur 3) angeschlossen werden können, die ihrerseits mit den teleskopischen Baugruppen verbunden sind.

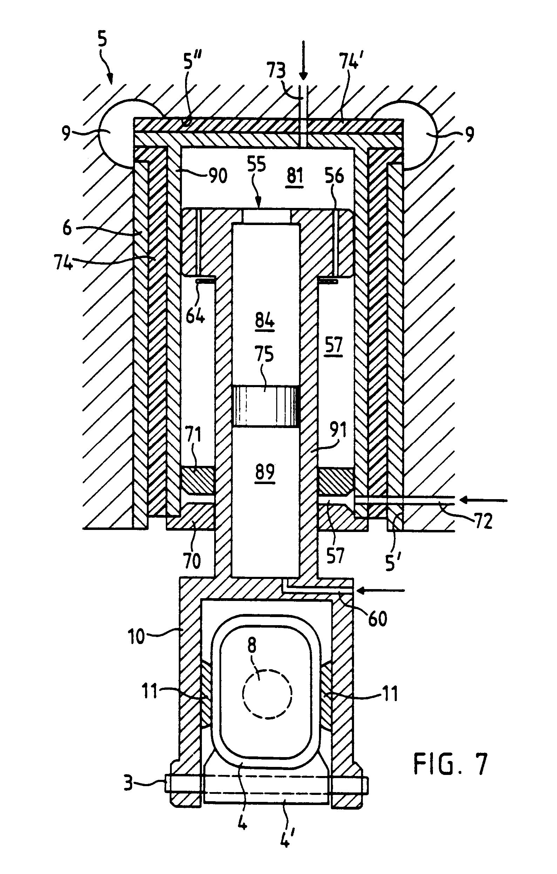

Fig. 7 zeigt eine weitere Ausführungsform einer robust gebauten teleskopischen Baugruppe, mit einem etwas modifizierten Halterungsrohr, eingebaut in einer für den Achsaufhängungsmechanimus vorgesehenen Ausnehmung im Fahrzeugrahmen oder Fahrgestell 5. In die üblicherweise zylinderförmige Ausnehmung 5' im Fahrzeugchassis, die am Zylinderboden 5" eine Ringnut 9 aufweist, ist zwischen dem Mantelrohr 91, das ist der Teleskopzylinder, und dem Zylinderboden 5" ein Federungskörper 74' angeordnet. Das Halterungsrohr 6 ist fest in die zylinderförmige Ausnehmung 5" eingepasst und die zwischen dem Mantelrohr 91 und dem Halterungsrohr 6 angeordnete Federungsschicht 74 ist im Bereich der Ringnut 9 fest eingeformt. Diese Anordnung Halterungsrohr 6, Federungsschicht 74 und Mantelrohr 91 absorbiert den über den Antrieb 8, die Achse 4 auf das Teleskoprohr 9Ø übertragenen Körperschall des Getriebes und den Achslärm, der auf diese Weise nicht vollumfänglich auf die zum Dröhnen neigenden Chassisflächen übertragen wird. Daneben ergibt sich, wie schon erwähnt, die nötige Querbeweglichkeit zwischen Chassis und Achsaufhängung. Im Mantelrohr eingeführt, ist, ähnlich wie bei den Figuren 4 und 5 ein als Plungerkolben ausgestalteter Arbeitskolben 55 mit Oeldurchführungskanälen 56 und den davorgeschalteten, strömungsverzögernden Stahllamellen 64. Der Arbeitskolben 55 ist oben offen und verbindet den oberen Kolbenraum 81 mit dem oberen Raum 84 im Teleskoprohr. Im Teleskoprohr selber ist für die Federung ein Trennkolben 75 angeordnet, der ein kompressibles Fluid im Raum 89 von einem inkompressiblen im Raum 84 trennt. Ferner ist unter dem Arbeitskolben 55 im Raum 57 ein das Teleskoprohr 91 umfangender Ringkolben 71 angeordnet, dessen Funktion im Zusammenhang mit Figur 4, bzw. 5 schon erklärt wurde.

An drei Stellen sind Ein-/Auslasskanäle für Fluide vorgesehen, um bestimmte Funktionen zu erhalten. Ein erster Fluidkanal 73 erlaubt den Durchlass von einem inkompressiblen Fluid, hier ist es Oel, welches in den Raum 81 über den Arbietskolben eingepresst wird, um beispielsweise durch ein Ausfahren des Teleskoprohres 91 mit der daran befestigten Achse 4 einen Hangausgleich zu ermöglichen. Durch den Plunger resultiert zudem eine Grundfederungswirkung. Derselbe Durchlass kann auch mit einer zuschaltbaren hydropneumatischen Federung (wie in Figur 3 gezeigt) verbunden sein, um den Federweg zu verlängern, das heisst, eine Zusatzfederung zu realisieren. Ein zweiter Fluidkanal 6Ø in das Teleskoprohr 91 zum Raum 89 unter dem Trennkolben 75 erlaubt den Durchlass eines kompressiblen Fluids, hier ist es Pressluft, um die Federung des Fahrzeugs zu beeinflussen. Ein dritter Fluidkanal 72 erlaubt den Durchlass eines inkompressiblen Fluids, hier wiederum Oel, mit welchem durch Druckbeaufschlagung des Ringkolbens 71 das Teleskoprohr (wie in Figur 4) in das Mantelrohr 9Ø hineingezogen werden kann. Mit dieser Funktion kann die Achse vom Boden abgehoben werden, wenn das Fahrzeug, bspw. als Kran, auf Stützen gebracht werden soll.

Der Raum im Mantelrohr 9Ø ist mit einer die Teleskoprohrführung mit übernehmenden Abdeckung 7Ø abgedeckt. Am unteren, aus der Abdeckung herausragenden Teil des Teleskoprohrs ist eine Achsaufhängegabel 1Ø vorzugsweise angeformt, in welcher mittels eines Durchsteckdorns 3 befestigt, die Achse 4,4' mit dem Achsantrieb 8 aufgehängt ist. Die Achse kann in dieser Aufhängegabel nur senkrecht zur Zeichnungsbene verschwenkt werden, die Drehung in der Zeichnungsebene, das wäre die Fahrtrichtung, ist durch diese Art der Aufhängung erfindungsgemäss verhindert. Zur Abstützung der Achse in der Aufhängegabel bei den zu erwartenden gewaltigen Drehmomenten, sind die Abstützbacken 11 vorgesehen.

Mit dieser, hier eben diskutierten Achsaufhängung mittels den teleskopischen Baugruppen, wie sie hier ebenfalls diskutiert wurden, lassen sich alle die erwähnten Funktionen, Federung, Zusatzfederung, Hangausgleich, Achsanhebung etc. und Vorteile wie geringer Platzbedarf, Schalldämmung, Querbeweglichkeit etc. mit einem einzigen Konzept, bzw. mit einer einzigen Baugruppe verwirklichen.

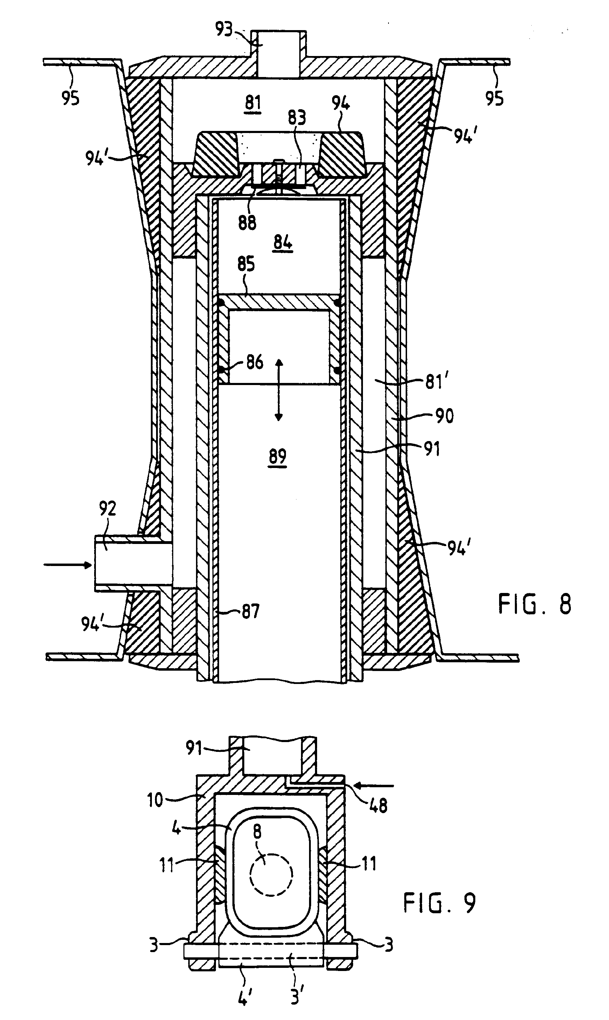

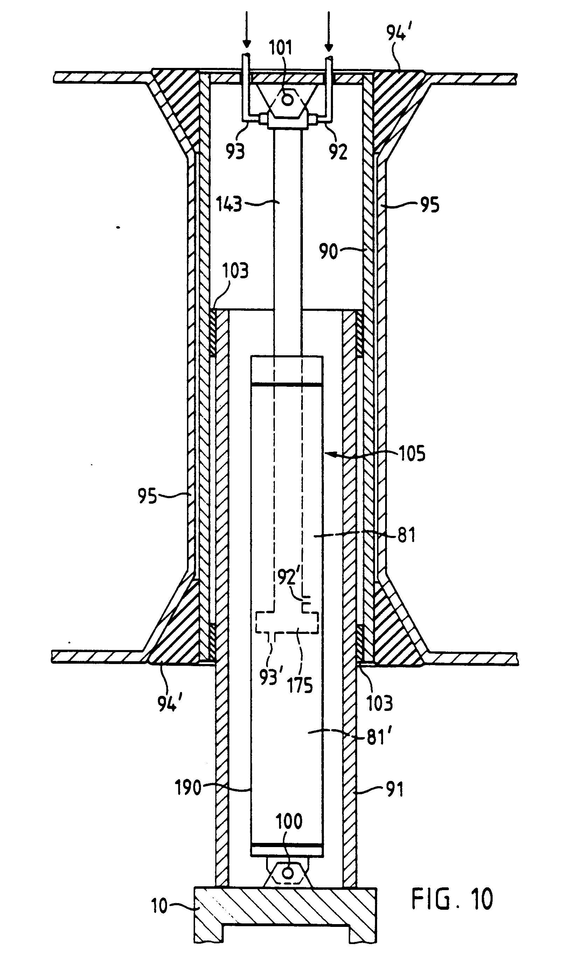

Fig. 8 zeigt eine weitere Variante der teleskopische Baugruppe mit einem gross dimensionierten Teleskoprohr 91. Der Zwischenraum zwischen dem Teleskoprohr 91 und dem Mantelrohr 9Ø ist klein gehalten. Die Oeffnung 92 dient nur für die Oelzufuhr, wenn die Achse angehoben werden soll, das heisst, um das Teleskoprohr in das Mantelrohr zu ziehen. Die Oeffnung 93 ist für den Anschluss an das Hydrauliksystem und ferner für den Anschluss an einen zu- und abschaltbaren Anschluss zu einem Federspeicher, wie ihn Fig. 3 darstellt. Zur Dämpfung von sehr harten Schlägen ist oberhalb des Kolbens 82 ein ringförmiger Gummipuffer 94 vorgesehen. Im Teleskoprohr 91 ist ein kleines Rohr 87 am unteren Ende befestigt. Es hat einen kleinen Abstand zum Teleskoprohr und dient dazu, evtl. Durchbiegungen des Hauptteleskoprohres bei Bremsnamövern auszugleichen, damit der Oel-Luftkolben 85 sich im Mantel- oder Führungsrohr ungehindert auf und ab bewegen kann. Es wird damit ein temporäres Verklemmen des Kolbens bei kurzzeitigem leichten Durchbiegen des Teleskoprohres verhindert. Durch die beachtliche Baugrösse des grossen Teleskoprohrs, kann in dieses sehr viel Oel der oberen Hydraulikkammer 81 aufgenommen werden. Der Einfederungsweg wird dadurch vergrössert. Beim Einfedern strömt das oben angesammelte Oel aus der Kammer 81 durch die in einem Kreis angeordneten Löcher 83 in den Raum 84 des Teleskoprohres und presst den Kolben 85 gegen den Luft- oder Gasdruck im Raum 89 nach unten. Beim Ausfedern dagegen, wird der schnelle Rückfluss des Oels durch die als Ventil wirkenden Stahllamellen 88 gehemmt, so dass auch hier der bereits erwähnte Stossdämpfungseffekt erreicht wird.

Das Mantelrohr 9Ø ist in zwei ringförmige und konisch verlaufende Gummipuffer 94 gelagert, welche sich ihrerseits wiederum an einem entsprechend geformten äusseren Halterungsrohr 95 abstützen, welches mit dem Fahrzeugkörper fest verbuden ist. Die konische, sich den Enden zu erweiternde Ausformung erlaubt eine grössere Verkantung der teleskopische Baugruppe, ohne gleich ein Durchbiegen des Teleskoprohrs herbeizuführen. Gerade bei schweren Fahrzeugen ist dieser "Spielraum" für ein Funktionieren bei extremen Betriebsbedingungen sehr von Bedeutung.

Fig. 9 zeigt ein Ausführungsbeispiel eines, die Achse 4 führenden Teleskoprohres 91. Im Gegensatz zu Fig. 1 ist hier der Gelenkpunkt und die Befestigung der Achse mittels den Bolzen 3 unterhalb des Achsrohres 4 angeordnet. Innerhalb im Achsrohr 4 ist die Achsantriebswelle 8 ersichtlich. Durch die Fluidöffnung 48 (siehe auch Fig. 4) kann im unteren Gasdruckraum 89 bspw. Fig. 7, ein Druckgas zu- und abgeführt werden.

Die vier Federelemente, bei einem zweiachsigen Fahrzeug, oder sechs Federelementen, bei einem 3-achsigen Fahrzeug, sind alle an einem zentralen Hydrauliksystem angeschlossen, mittels welchem die Höhenverstellung, Geländeausgleich, Hangverneigung, Nivellierung und zusätzliche Federung, über zuschaltbare Federspeicher bewerkstelligt werden können.

Zur Lärmdämpfung, aber auch zur Schlagdämpfung und sowie auch zur Distanzveränderung der Anlenkpunkte 3 an der Achse 4, wenn das Fahrzeug, wie in Fig. 6 dargestellt, einseitig stark einfedert, sind zwischen dem erwähnten Mantelrohr 91 und dem am Fahrzeugkörper eingebauten Trägerrohr 95 eine elastische Schicht (Plastik oder Gummi) 25, 53, oder keilförmige Gummiringe 94 (Fig. 8) eingebaut. Möglich jedoch ist auch eines der beiden Mantelrohre fest einzubauen, während das zweite Mantelrohr mittels einem Gelenklager in der Weise befestigt ist, dass das Mantelrohr und das in ihm geführte Teleskoprohr quer zur Längsachse des Fahrzeuges soweit pendeln kann, dass die oben erwähnte Distanzveränderung der Anlenkpunte 3 bei Schräglage der Achse, wie dies Fig. 6 darstellt, ausgeglichen werden kann. Die erwähnten Teleskoprohre 2 sind im Mantelrohr 6 drin mit einem Hydraulikkolben 2Ø (Fig. 2) verbunden, so dass die schon erwähnte Doppelfunktion entsteht. Das Mantelrohr 6, mit dem die Achse führenden Teleskoprohren wird dadurch zu einer Baugruppe, die ähnlich wie ein doppelt wirkender Hydraulikzylinder funktioniert. Durch die Oeffnungen 21, 59 und 93 kann die Oelzuführung oder Oelentnahme bewerkstelligt werden. Damit kann ein Fahrzeug angehoben oder abgesenkt werden, es können Schräglagen des Fahrzeukörpers im Hanggelände ausgeglichen werden, es kann der Geländeausgleich bewerkstelligt werden, und es kann durch Hinzuschalten eines hydraulischen Membranspeichers -wie z.B. mit der Ziffer 3Ø in Fig. 3 dargestellt, eine sogenannte hydropneumatische Federung realisiert werden.

Im weiteren kann mittels einem zweiten Kolben, einem sogenannten Hohlkolben 41,51 siehe Fig. 4 und 5, durch Einpressen von Oel, über die Oeffnung 42, das Teleskoprohr und mit ihm die angekuppelte Achse des Fahrzeuges angehoben werden. Dies ist ein enormer Vorteil, insbesondere für Kranfahrzeuge, welche bei ihrer Arbeit als Kran die schweren Achsen angehoben haben müssen. Letzteres deshalb, weil das ganze Fahrzeuggewicht auf den weiter aussen abstützenden Abstützungen liegen muss, wenn der Kran volle Hubkraft erreichen soll. Aber auch zum Ausnivellieren eines Fahrzeuges und zum Stabilisieren, z.B. eines Geschützfahrzeuges, kann die oben genannte Vorrichtung vorteilhaft sein. Die Stabilisierung kann dabei dadurch erreicht werden, dass man das Oel oberhabl des Kolbens 2Ø,44,55 durch die Oeffnungen 22',47,59 nicht austreten lässt, wodurch der Oel-Luft-Kolben 21,46,58 nach unten gedrückt wird, so dass durch den hohen Gegendruck jegliche Federmöglichkeit des Fahrzeugkörpers gegenüber dem Fahrwerk minimal wird.

Wie schon angedeutet, werden gemäss Erfindung die die Achsen führenden Teleskoprohre 2,23,43,54,91 in zwei Funktionen als Träger einer hydropneumatischen Federung mit gleichzeitiger Stossdämpferfunktion genutzt. Schnellfahrende Fahrzeuge haben rasch auftretende, von den Achsen kommende Schläge zu verkraften. Zu diesem Zweck kann die plötzlich unter hohem Druck stehende Oelmenge 81 oberhalb des Kolbens 82 über die Ventillöcher 83,45,56 in das Innere des Teleskoprohres 84 (Fig. 2,4,5 sowie Fig. 8) ausweichen. Als notwendigen Gegendruck besteht im Innern des Teleskoprohrs ein freischwenbender Trennkolben 21,46,58,85 mit Dichtungen 86, welche den Kolben im Rohr 87 abdichten. Seine Unterseite ist mit einem Fluid, Gas oder Pressluft, gefüllt, welches einen Druck von bspw. 8 bis 14 bar aufweist. Die Einfüllung des Fluids erfolgt über die Oeffnung 22, 48, 6Ø. Da ein gewisses Leck, d.h. Abgleiten der Luft oder des Gases in den Oelbereich hinüber nicht vermieden werden kann, muss der Druck überprüft werden können, sowie die notwendige Nachfüllung über eine Ventilbetätigung vom Fahrerhaus aus bewerkstelligt werden können (dies ist in den Abbildungen nicht dargestellt).

An den erwähnten Ventillöchern 83, (Fig. 8) kann also bei Achsschlägen, das unter hohen Druck stehende Oel 81, oberhalb des Kolbens 82, in ein T-Rohr 84 ausweichen, an welches über hier nicht dargestellte Zuschaltmittel einerseits die hydropneumatische Federung (Fig. 3) und andererseits das zentrale hydraulische System angeschlossen werden kann (Fig. 6). An den Löchern 83 sind nun aber noch Stahlmembranblätter 88 angeordnet, welche die Aufgabe haben, das Fluid, hier, Oel, schnell von oben nach unten durchfliessen zu lassen, wobei der Kolben 85 nach unten gegen die Pressluft oder das Pressgas gedrückt wird. Um jedoch ein rasches "Zurückschnellen" des Kolbens 82,85 sowie der Achse 4 zu verhindern, schliessen die Lamellen 88, die Eintrittslöcher 83 annähernd zu, so dass dem nach Passieren der den Stoss verursachenden Bodenwelle oder Hindernis das Oel aus dem Teleskoprohr nur langsam wieder in den Raum 84 zurückfliessen kann. Die Aufgabe der Lamellen 88 bewirken also eine Stossdämpfung. Dank dieser zusätzlichen Massnahme kann auf das Anbringen von den sonst üblichen Stossdämpfer verzichtet werden. Abgesehen davon, wäre der erforderliche Platz für derart grosse Stossdämpfer, wie sie eben Schwerfahrzeuge nötig sind, nicht vorhanden, d.h. die Ladefläche müsst auch aus diesem Grunde höher hinauf plaziert werden, was die eingangs erwähnten schweren Nachteile mit sich bringen würde.

Grossfahrzeuge haben gezwungenermassen grosse Räder, schwere massive Achskörper, erfordern eine grosse Bremsanlage usw. Müssen nun darauf hinauf noch eine Ladebrücke sowie Antriebsaggregate, Fahrerhaus etc. aufgebaut werden, wird die gesamte Fahrzeughöhe, bei der Anwendung der bis heute üblichen Radaufhängungen und Federsystemen, viel zu hoch. Um bei der üblichen Chassis/Aufbautechnik solches zu vermeiden, müssten die Fahrzeuge entsprechend breit gebaut werden. Doch dies geht auch wieder nicht ohne weiteres, weil bspw. die Strassenverkehrsgesetze in praktisch allen Industrieländern die Höchstbreite für Strassenfahrzeuge auf 2,5 Meter festgesetzt hat. Bei den grossen Bau- und Erdbewegungsfahrzeugen sieht die Sache etwas anders aus. Diese können, sofern sie nicht auf den öffentlichen Strassen benützt werden, praktisch in allen Breiten gebaut werden. Der Nachteil einer übergrossen Breite zeigt sich jedoch dann, wenn so ein Fahrzeug von einem Ort zum andern gebracht werden muss. Figur 1Ø zeigt ein weiteres Ausführungsbeispiel einer teleskopischen Baugruppe mit einem im Innern des Mantelrohrs und des Teleskoprohrs angeordneten, doppeltwirkenden Hydraulikzylinder zur Hanglageverstellung und Achsanhebung. Aehnlich wie bei der Ausführungsform nach Fig. 8 wird das Mantelrohr 9Ø im Halterungsrohr 95 durch zwei keilförmige Ringe gefedert gehalten, sodass die Querbeweglichkeit einerseits erhalten und die Körperschallleitung andererseits unterbrochen ist. Im Mantelrohr ist das Teleskprohr 91 verschiebbar angeordnet und mittels Lagerbüchsen 1Ø3 zentriert. Am Teleskoprohr angeschweisst ist die gabelförmige Vorrichtung 1Ø zur Befestigung der hier nicht dargestellten Achse. Innerhalb der teleskopisch ausziehbaren Anordnung 9Ø,91 ist an gelenkigen Verbindungen 1ØØ,1Ø1 ein doppeltwirkender Hydraulikzylinder 1Ø5 eingehängt, mit dessen Hilfe die oben erwähnten Hanglageausgleich und Achsanhebung ausgeführt werden können. Dieser besteht aus einem Zylinder 19Ø und einem darin angeordneten Arbeitskolben 175 an einer Kolbenstange 143. Zwei Fluidzuleitungen 92,93 führen durch die Kolbenstange durch je eine Oeffnung 93′,92′ in den Raum 81 über und in den Raum 81′ unter dem Arbeitskolben. Die Fluidzuleitungen, bspw. Oelleitungen, sind an einer Hydraulikzentrale angeschlossen. Selbstverständlich kann in der Kolbenstange 143 auch ein Trennkolben vorgesehen sein, um durch Einführung eines kompressiblen Fluids eine Grundfederung zu realisieren. Diese Möglichkeit ist hier nicht dargestellt. Die Federung kann durch Zuschaltung eines Hydraulikspeichers, wie in Figur 3 gezeigt, gemäss Figur 6 ebenfalls hergestellt werden.

An Stelle eines doppelt wirkenden Hydraulikzylindeers kann durch die Vergrösserung des Durchmessers des ersten Teleskoprohrs 91 ein zweites, in das erste eingeführte Teleskoprohr 143 an der Kopfseite 1Ø1 des Mantelrohrs 9Ø befestigt werden und dessen Arbeitszylinder 19Ø kann an der Kopfseite 1ØØ im ersten Teleskoprohr 91 befestigt werden, wobei und das erste Teleskoprohr 91 ohne Arbeitskolben ausgebildet ist und so direkt am Mantelrohr 9Ø gleitet, oder über Lagerbüchsen 1Ø3 oder Kugel- oder Rollenführungen im Mantelrohr geführt ist. In den Zwischenraum zwischen den Lagerbüchsen 1Ø3 und dem Mantelrohr/Teleskoprohr 9Ø/91 ist vorzugsweise ein Vorrat eines Schmier- oder Gleitmittels eingebracht. Der so eingefangene Luftraum wirkt nebst den zuschaltbaren hydropneumatischen Federelementen als Grundfederung. Ueber die Anschlüsse 92,93 kann zudem noch ein zuschaltbares Hydrauliksystem angeschlossen werden, mit welchem die Höhenverstellung, Hangneigungsausgleich und Achsanhebung bewirkbar sind.

## Patentansprüche

1. Achsaufhängung für Fahrzeuge, insbesondere für Schwerfahrzeuge und Spezialfahrzeuge, die zwei teleskopartige Achse-Fahrgestellverbindungen aufweist, **dadurch gekennzeichnet,**

dass die teleskopartigen Achse-Fahrgestellverbindungen einen fest mit dem Fahrgestell (5) verbundenen Teleskopzylinder und ein im Teleskopzylinder verschiebbares, gelenkig mit der Achse (5) verbundenes Teleskoprohr (2, 23, 43, 54, 91) aufweisen,

dass der Teleskopzylinder ein äusseres Halterungsrohr (6, 95) aufweist, in dem ein mit einem elastischen Material (25, 94) ummanteltes Mantelrohr (24, 49, 52, 90) strammsitzend angeordnet ist,

dass das Teleskoprohr an seinem einen Ende einen im Mantelrohr verschiebbaren Arbeitskolben (20, 44, 55, 82), in seinem Innern einen Trennkolben (21, 46, 58, 75) und an seinem anderen Ende eine Gelenkverbindung (3) aufweist, wobei die Gelenkverbindung derart angeordnet ist, dass die Achse quer zum Fahrzeug schwenkbar aber nicht um die eigene Achse verdrehbar ist,

und dass das Teleskoprohr und das Mantelrohr jeweils eine Fluidzuleitung aufweisen (22", 48, 60 bzw. 22' 47, 59, 73, 93), sodass Fluidmittel für die Federung des Fahrzeuges, zu- oder abgeführt werden können.

2. Achsaufhängung nach Anspruch 1, **dadurch gekennzeichnet,** dass zwischen dem Teleskoprohr (23, 43, 54, 91) und dem Mantelrohr (24, 49, 52, 90) ein Zwischenraum (57) vorgesehen ist, welcher mit einer Öffnung (42, 92) versehen ist, durch die ein Fluidmittel zu oder abge führt werden kann, sodass durch Zu- und Abführen von Fluid durch die Öffnung (22', 47, 59, 73, 93) zum Zylinderraum über dem Arbeitskolben und durch die Öffnung (42, 92) zum Zylinderraum unter dem Arbeitskolben die Hangverneigung, Höhenverstellung, Zusatzfederung und der Geländeausgleich gesteuert werden können.

3. Achsaufhängung nach einem der Ansprüche 1 oder 2, **dadurch gekennzeichnet,** dass das Teleskoprohr (91) an seiner Innenwandung zur Gleitführung eines Kolbens (85) bearbeitet ist oder ein entspre chend bearbeitetes Rohr (87) eingeschoben und befestigt ist, und im Teleskoprohr ein freischwebender Trennkolben (85) mit entsprechen den Abdichtungen (86) vorgesehen ist, auf dessen Unterseite Gas oder Pressluft anliegt, während auf dessen Oberseite Öl dagegen drückt, welches durch die Öffnungen (83, 45, 56) im Arbeitskolben (82, 44, 55) einführbar ist.

4. Achsaufhängung nach Patentanspruch 3, **dadurch gekennzeichnet,** dass der Innenraum des Teleskoprohres mit dem freischwebenden Trennkolben (21,46,58,85) zwischen einem kompressiblen Fluid einer seits und einem unter Druck stehenden inkompressiblen Fluid ande rerseits eine hydropneumatische Federung bewirkt, welche die Pri märfederung des Fahrzeuges beinhaltet, wobei über im Arbeitskolben (20, 44, 55, 82) angeordnete Öffnungen (45, 56, 83) mit zugeordneten Stahllamellen (64, 88) ein schnelles Eintreten des inkompressiblen Fluids oberhalb des Arbeitskolbens (20, 44, 50, 82) in den Raum (84) unter dem Kolben erlaubt wird, dessen Rückfluss jedoch an densel ben Lamellen (64, 88) vorbei verzögert wird, sodass ein Stossdämp fereffekt auftritt.

5. Achsaufhängung nach einem der Ansprüche 1 bis 4, **dadurch gekennzeichnet,** dass an der Anschlussöffnung (93, 59, 22', 47), welche mit einem regulierbaren Hydrauliksystem in Verbindung bringbar ist, parallel dazu eine Verbindungsleitung zu einem hydraulischen Fe derspeicher (Fig. 3) vorgesehen ist, welcher über Öffnen eines Sperr ventils zu- oder abschaltbar ist, sodass bei Bedarf ein zusätzlicher Federweg des Teleskoprohres herstellbar ist, wodurch eine weichere Federung des Fahrzeuges bewirkbar ist.

6. Achsaufhängung nach einem der Ansprüche 1 bis 5, **dadurch gekennzeichnet,** dass zwischen dem Halterungsrohr (6, 95) und dem Mantel rohr (24, 49, 52, 90) einer teleskopischen Baugruppe eine federnde Schicht (25, 53) und/oder federnde Keilringe (94) oder andere fe dernde Vorrichtungen vorgesehen sind, um durch die damit erziel bare Querbeweglichkeit die entstehende Distanzveränderung der beiden Anlenkpunkte (3) an derselben Achse (4) auszugleichen, wenn das Fahrzeug einseitig stark einfedert.

7. Achsaufhängung nach einem der Ansprüche 1 bis 6, **dadurch gekennzeichnet,** dass durch Vergrösserung des Durchmessers des ersten Teleskoprohres (91) ein zweites, in das erste eingeführte Teleskop rohr (143) an der Kopfseite (101) des Mantelrohres (90) und dessen Abeitszylinder (190) an der Kopfseite ( 100) im ersten Teleskoprohr (91) befestigt sind und das erste Teleskoprohr (91) ohne Arbeitskol ben ausgebildet ist und so direkt am Mantelrohr (90) gleitet, oder über Lagerbüchsen ( 103) oder Kugel- oder Rollenführungen im Man telrohr geführt ist.

8. Achsaufhängung nach Anspruch 7, **dadurch gekennzeichnet,** dass im erweiterten ersten Teleskoprohr (91) ein doppelt wirkender Hydrau likzylinder (105), einerseits am Telskoprohr unten (100) und ander seits oben (101) am Boden des Mantelrohres (90) gelenkig angekop pelt ist, womit die Federung, Höhenverstellung, Ausnivellierung und Hangverneigung, über ein angeschlossenes Hydrauliksysstem und Federungssystem bewerkstelligt werden kann.

9. Achsaufhängung nach einem der Ansprüche 1 bis 7, **dadurch gekennzeichnet,** dass unterhalb des Arbeitskolbens (44, 55), der Drchström öffnungen (45, 56) aufweist, ein das Teleskoprohr (43, 54) umgreifen der Ringkolben (41, 51) angeordnet ist, mittels welchem durch Ein führen von Öl durch Öffnungen (42) im unteren Kolbenraum dessel ben, der Arbeitskolben mit dem Teleskoprohr nach oben gedrückt werden kann, sodass dadurch die daran aufgehänge Achse vom Bo den abhebbar ist.

**Claims**

1. Axle suspension for vehicles, particularly for heavy and special vehicles, which has two telescopic axle chassis connections, characterized in that the telescopic axle chassis connections have a telescopic cylinder firmly connected to the chassis (5) and a telescopic tube (2, 23, 43, 54, 91) connected in articulated manner to the axle (4) and displaceable in the telescopic cylinder, that the telescopic cylinder has an outer holding tube (6, 95), in which is placed in tightly seated manner a jacket tube (24, 49, 52, 90) covered by an elastic material (25, 94), that at its one end the telescopic tube has a working piston (20, 44, 55, 82) displaceable in the jacket tube, in its interior a separating piston (21, 46, 58, 75) and at its other end a hinge joint (3), which is positioned in such a way that the axle is pivotable at right angles to the vehicle but is not rotatable about its own axis and that the telescopic tube and the jacket tube in each have a fluid feedline (22″, 48, 60 or 22′, 47, 59, 73, 93), so that fluid for the spring suspension of the vehicle can be supplied or removed.

2. Axle suspension according to claim 1, characterized in that between the telescopic tube (23, 43, 54, 91) and the jacket tube (24, 49, 52, 90) is provided a gap (57), which has an opening (42, 92), through which a fluid can be supplied or removed, so that through the supply and removal of fluid through the opening (22′, 47,, 59, 73, 93) to the cylinder chamber via the working piston and through the opening (42, 92) to the cylinder chamber below the working piston, it is possible to control the gradient compensation, height adjustment, additional suspension and terrain compensation.

3. Axle suspension according to one of the claims 1 or 2, characterized in that the inner wall of the telescopic tube (91) is worked for the sliding guidance of a piston (85) or a correspondingly worked tube (87) is inserted and fixed, and in the telescopic tube is provided a suspended separating piston (85) with corresponding packings (86), to whose underside gas or compressed air is applied, whereas oil presses on its top, sail oil being introduced through the openings (83, 45, 56) in the working piston (82, 44, 55).

4. Axle suspension according to claim 3, characterized in that the interior of the telescopic tube with the suspended separating piston (21, 46, 58, 85) brings about a hydropneumatic suspension between a compressible fluid on the one hand and a pressurized, incompressible fluid on the other, which comprises the primary suspension of the vehicle and by means of openings (45, 56, 83) located in the working piston (20, 44, 55, 82) with associated steel laminas (64, 88), it is possible for the incompressible fluid above the working piston (20, 44, 50, 82) to rapidly enter the space (84) below the piston, but whose return flow is delayed on the same laminas (64, 88), so that a shock absorber effect occurs.

5. Axle suspension according to one of the claims 1 to 4, characterized in that on the connecting opening (93, 59, 22′, 47), which can be connected to a regulatable hydraulic system and parallel thereto is provided a connecting line to a hydraulic spring accumulator (fig. 3), which can be connected in or out by opening a check valve, so that if necessary an additional spring displacement of the telescopic tube can be produced, which leads to a less rigid suspension of the vehicle.

6. Axle suspension according to one of the claims 1 to 5, characterized in that between the holding tube (6, 95) and the jacket tube (24, 49, 52, 90) of a telescopic subsassembly are provided a resilient layer (25, 53) and/or resilient conical rings (94) or other resilient means, so that as a result of the transverse mobility which can be obtained the distance or spacing change of the two articulation points (3) on the same axle (4) can be comprensated, if the vehicle springs in strongly on one side.

7. Axle suspension according to one of the claims 1 to 6, characterized in that by increasing the diameter of the first telescopic tube (91) a second telescopic tube (143) introduced into the first on the top (101) of the jacket tube (90) and its working cylinder (190) on the top (100) are fixed in the first telescopic tube (91) and the latter is constructed without a working piston and thus slides directly on the jacket tube (90), or is guided in the latter by means of bearing bushes (103) or ball or roller guides.

8. Axle suspension according to claim 7, characterized in that in the widened first telescopic tube (91) a double-acting hydraulic cylinder (105) is coupled in articulated manner on the one hand to the telescopic tube at the bottom (100) and on the other at the top (101) to the base of the jacket tube (90), so that the spring suspension, vertical adjustment, balancing out and gradient compensation can be brought about by means of a connected hydraulic system and spring suspension system.

9. Axle suspension according to one of the claims 1 to 7, characterized in that below the working piston (44, 55), which has passage openings (45, 56), is provided a ring piston (41, 51) engaging round the telescopic tube (43, 54) and by means of which by introducing oil through openings (42) in the lower piston chamber thereof, the working piston can be forced upwards with the telescopic tube, so that as a result the axle suspended thereon can be raised from the ground.

**Revendications**

1. Suspension d'essieu pour véhicules, notamment pour véhicules lourds et véhicules spéciaux, qui comprend deux liaisons télescopiques entre essieu et châssis, caractérisée par le fait que les liaisons télescopiques entre essieu et châssis comprennent un cylindre télescopique assemblé rigidement au châssis (5) et un tube télescopique (2,23,43,54,91) pouvant coulisser dans le cylindre télescopique et relié à l'essieu (5) par une articulation, par le fait que le cylindre télescopique comprend un tube de fixation extérieur (6,95) dans lequel est disposé avec un montage raide un tube enveloppe (24,49,52,90) gainé d'une matière élasique (25,94), par le fait que le tube télescopique présente, à l'une de ses extrémités, un piston de travail (20,44,55,82) pouvant coulisser dans le tube enveloppe, dans sa cavité intérieure, un piston séparateur (21,46,58,75) et, à son autre extrémité, une articulation (3), l'articulation étant agencé de manière que l'essieu puisse osciller transversalement au véhicule mais qu'il ne puisse pas tourner autour de son propre axe, et par le fait que le tube télescopique et le tube enveloppe présentent chacun une conduite d'amenée de fluide (22″,48,60 et 22′,47,59,73,93 respectivement), de sorte que des milieux fluides servant pour la suspension élastique du véhicule peuvent être amenés et évacués.

2. Suspension d'essieu selon la revendication 1, caractérisée par le fait qu'il est prévu entre le tube télescopique (23,43,54,91) et le tube enveloppe (24,49,52,90) un espace intermédiaire (57) qui est muni d'une ouverture (42,92) à travers laquelle un milieu fluide peut être amené ou évacué, de sorte que, par introduction et évacuation de fluide dans et hors de la chambre du cylindre située au-dessus du piston de travail à travers l'ouverture (22′,47,59,73,93) et dans ou hors de la chambre du cylindre située au-dessus du piston de travail, à travers l'ouverture (42,92), il est possible de commander la compensation d'inclination, le réglage de la garde de sol, une suspension élastique additionnelle et la compensation en tout terrain.

3. Suspension d'essieu selon l'une des revendications 1 et 2, caractérisée par le fait que le tube télescopique (91) est traité au niveau de sa paroi intérieure pour permettre le coulissement d'un piston (85) ou un tube (87) traité de façon correspondante est emmanché et fixé dans ce tube et il est prévu dans le tube télescopique un piston séparateur (85) librement flottant muni de garnitures d'étanchéité appropriées (86) et contre la face inférieure duquel agit un gaz ou de l'air comprimé, tandis que, sur sa face supérieure, presse de l'huile qui peut être introduite dans le piston de travail (82,44,55) à travers les ouvertures (83,45,56).

4. Suspension d'essieu selon la revendication 3, caractérisé par le fait que le volume intérieur du tube télescopique forme, avec le piston séparateur librement flottant (21,46,58,85) interposé entre un fluide compressible, d'une part, et un fluide incompressible sous pression d'autre part, une suspension hydropneumatique qui constitue la suspension principale du véhicule, le fluide incompressible situé au-dessus du piston de travail (20,44,50,82) pouvant entrer dans l'espace (84) situé au-dessous du piston à travers des ouvertures (45,56,83) pratiquées dans le piston de travail (20,44,55,82) et munies de lamelles d'acier (64,88), tandis que le courant inverse est freiné au droit des mêmes lamelles (64,88), de sorte qu'on obtient un effet d'amortissement de choc.

5. Suspension d'essieu selon l'une des revendications 1 à 4, caractérisée par le fait que, au niveau de l'ouverture de raccordement (93,59,22′,47) qui peut être mise en liaison avec un circuit hydraulique équipé d'une régulation, il est prévu en parallèle avec cette ouverture une conduite de liaison menant à un accumulateur élastique hydraulique (figure 3) qui peut être mis en circuit ou hors circuit par l'ouverture d'une vanne d'arrêt, de sorte qu'en cas de besoin, on peut obtenir un supplément de débattement élastique du tube télescopique, grâce auquel on peut réaliser une suspension plus souple du véhicule.

6. Suspension d'essieu selon l'une des revendications 1 à 5, caractérisée par le fait qu'il est prévu, entre le tube de fixation (6,95) et le tube enveloppe (24,49,52,90) d'un sous-ensemble télescopique, une couche élastique (25,53) et/ou des bagues de coincement élastiques (94) ou d'autres dispositifs élastiques, pour compenser par la mobilité transversale qui peut être obtenue de cette façon, la variation de distance d'écartement des deux points d'articulation (3) sur le même essieu (4) lorsque le véhicule subit une force compression de la suspension sur un côté.

7. Suspension d'essieu selon l'une des revendications 1 à 6, caractérisée par le fait que, grâce à un agrandissement du diamètre du premier tube télescopique (91), un deuxième tube télescopique (143) introduit dans le premier est fixé au côté de tête (101) du tube enveloppe (90) et le cylindre de travail (190) de ce tube est fixé au côté de tête (100) du premier tube télescopique, et le premier tube télescopique (91) est réalisé sans piston de travail et glisse donc directement contre le tube enveloppe (90) ou est guidé dans le tube enveloppe par l'intermédiaire de coussinets (103) ou de guides à billes ou à rouleaux.

8. Suspension d'essieu selon la revendication 7, caractérisée par le fait que, dans le premier tube télescopique (91) agrandi, est disposé un cylindre hydraulique (105) à double effet, qui est articulé, d'une part, en bas (100), au tube télescopique en position et, d'autre part, en haut (101), sur le fond du tube enveloppe (90), de sorte que la suspension, le réglage de la garde au sol, la correction de l'assiette et la compensation de l'inclinaison de pente peuvent être réalisés au moyen d'un circuit hydraulique et de suspension qui y est raccordé.

9. Suspension d'essieu selon l'une des revendications 1 à 7, caractérisée par le fait qu'au-dessous du piston de travail (44,55) qui présente des ouvertures de passage (45,56), est disposé un piston annulaire (41,51) qui entoure le tube télescopique (43,54) et au moyen duquel le piston de travail peut être repoussé vers le haut avec le tube télescopique, par introduction d'huile dans la chambre inférieure du piston annulaire, à travers des ouvertures (42), de sorte que l'essieu suspendu à ce piston peut ainsi être soulevé.

FIG. 1

FIG. 2

FIG. 3

FIG. 4

FIG. 5

FIG. 6

FIG. 7

FIG. 8

FIG. 9

FIG. 10